## Europäisches Patentamt
## European Patent Office
## Office européen des brevets

(19)

(11) Numéro de publication: **0 187 577**
**B1**

(12)

# FASCICULE DE BREVET EUROPÉEN

(45) Date de publication du fascicule du brevet:
07.02.90

(51) Int. Cl. ⁵: **B 21 C 33/00, B 23 D 23/00**

(21) Numéro de dépôt: **85402419.7**

(22) Date de dépôt: **04.12.85**

(54) Installation de préparation de billettes de métal à filer.

(30) Priorité: **10.12.84 FR 8418811**

(43) Date de publication de la demande:
**16.07.86 Bulletin 86/29**

(45) Mention de la délivrance du brevet:
**07.02.90 Bulletin 90/06**

(84) Etats contractants désignés:
**AT BE DE GB IT**

(56) Documents cité:
**FR-A-2 340 160**
**FR-A-2 358 232**
**JP-A-54 155 959**
**SU-A-749 579**
**US-A-2 881 297**
**US-A-4 343 209**
**US-A-4 404 830**

**Le dossier contient des informations techniques présentées postérieurement au dépôt de la demande et ne figurant pas dans le présent fascicule.**

(73) Titulaire: **CLECIM**
**107 boulevard de la Mission Marchand**
**F-92400 Courbevoie (FR)**

(72) Inventeur: **Bessey, Guy**
**4 rue des Hortensias**
**F-95430 Auvers sur Oise (FR)**
Inventeur: **Bimbert, Claude**
**8 allée des Jonquilles**
**F-93360 Neuilly Plaisance (FR)**

(74) Mandataire: **Phélip, Bruno**
**c/o Cabinet Harlé & Phélip 21, rue de La Rochefoucauld**
**F-75009 Paris (FR)**

LIBERGRAF, STOCKHOLM 1990

## Description

L'invention a pour objet une installation de préparation de billettes de métal tel que, par exemple, du cuivre, du laiton ou de l'aluminium, destinées à être transformées en profilé par extrusion dans une presse de filage.

Les installations de fabrication de produits pressés ou forgés constitués en matériaux métalliques non ferreux, par exemple des profilés en cuivre, laiton ou aluminium comprennent normalement un four de réchauffage dans lequel passe un lopin de métal, c'est-à-dire une barre réalisée en grande longueur dans une fonderie, pour y être amené à la température de façonnage. Le lopin ainsi réchauffé est coupé dans une cisaille à chaud en morceaux ou "billettes" qui sont introduites ensuite dans une installation de façonnage telle qu'une presse à filer et dont la longueur, déterminée en fonction des performances de la presse, est toujours relativement courte. Les installations de préparation des billettes comprennent donc, d'une façon générale, un four de réchauffage comprenant une enceinte définissant un logement allongé pour le lopin, et munie de moyen de chauffage de ce dernier à la température voulue.

Généralement, le logement est ouvert à ses deux extrémités et l'enceinte est associée à un moyen de poussée du lopin suivant l'axe du logement. Le lopin, introduit par un orifice d'entrée à l'intérieur du logement, est chauffé jusqu'à la température voulue puis poussé axialement pour ressortir par un orifice de sortie placé à l'autre extrémité et à proximité duquel est placée la cisaille. Celle-ci est constituée de deux paires de mâchoires accolées définissant chacune un orifice de section sensiblement égale à celle du lopin et centré sur l'axe de déplacement de ce dernier. Pendant la poussée du lopin, les orifices des mâchoires sont placés dans le prolongement du logement de façon que le lopin s'y enfile en sortant du four.

La cisaille comprend une paire de mâchoires arrières montées dans un bâti fixe et une paire de mâchoires avant montées coulissantes, transversalement à l'axe de déplacement du lopin, le long des mâchoires arrières, du côté opposé au four. Pendant le cisaillage, qui est effectué entre la mâchoire avant supérieure et la mâchoire arrière inférieure, le lopin est bloqué au moins à l'arrière du plan de coupe, entre la mâchoire arrière inférieure, qui constitue un appui fixe, et la mâchoire arrière supérieure, qui est associée à des moyens de serrage par déplacement transversal à l'axe du lopin.

En outre, la mâchoire avant inférieure est munie généralement d'un prolongement permettant de supporter la partie du lopin dépassant en avant de la mâchoire et dont la longueur peut être fixée par une butée placée sur ledit prolongement, dans une position réglable.

De la sorte, pendant la coupe d'une billette, effectuée par coulissement des mâchoires avant, le lopin reste bien maintenu entre les deux paires de mâchoires, ce qui permet d'éviter des déformations susceptibles de transmettre des réactions au four de réchauffage.

Dans certains cas, le chauffage du lopin est réalisé par un four à induction comprenant un inducteur définissant un logement tubulaire dans lequel passe le lopin. Ce dernier doit avoir une section seulement un peu inférieure à celle du logement, de telle sorte que les pertes de chaleur sont faibles, l'étanchéité étant assurée par le lopin lui-même. Il en résulte toutefois la nécessité d'adapter le diamètre de l'inducteur a celui du lopin et un risque accru de détérioration du four par déformation du lopin au moment de la coupe. En outre, il est nécessaire d'utiliser des lopins parfaitement droits et, lorsqu'on utilise des barres brutes de fonderie, on est amené à les découper à l'avance en billettes avant le chauffage dans le four.

On utilise également, pour le chauffage des lopins, des fours de grande dimension, chauffés par exemple au gaz, qui présentent l'avantage de réaliser le chauffage du lopin entier et même de plusieurs lopins et sont plus économiques.

En effet, le four comprend alors un logement de grande longueur, au moins égale à celle d'un lopin, et souvent suffisante pour contenir plusieurs lopins placés l'un derrière l'autre. Le brûleur est placé près de la sortie du four pour amener à la température voulue la partie antérieure du lopin et les fumées sont aspirées vers l'entrée du four de façon à réaliser un préchauffage de la partie postérieure du lopin ou des lopins en attente.

Pour éviter les déperditions de chaleur, il avait semblé naturel, jusqu'à présent, d'écarter légèrement la cisaille du four et de fermer l'orifice de sortie du logement par une porte amovible. De ce fait, après avoir poussé le lopin jusqu'en butée sur le prolongement de la mâchoire d'appui avant, et réalisé le cisaillage de la billette à la longueur voulue, on doit repousser le lopin au moyen d'un vérin placé sur la mâchoire avant supérieure, pour réintroduire dans le four la partie dépassant, pendant le cisaillage, hors de celui-ci et l'on ferme alors l'extrémité du four de façon que l'extrémité avant du lopin soit maintenue à la température voulue pendant que l'on évacue la billette coupée.

Cependant, depuis un certain temps, on a recherché, dans les installations d'extrusion modernes, à réaliser des cadences de production de plus en plus élevées en réduisant les temps morts et en augmentant les vitesses d'extrusion. Jusqu'à présent, les efforts des constructeurs ont porté essentiellement sur la presse à filer et sur les matériels situés en aval de celle-ci. Or, on est arrivé à atteindre des cadences d'extrusion telles qu'à l'heure actuelle c'est l'installation de préparation des billettes qui peut devenir un élément perturbant risquant de freiner la cadence.

L'invention a pour objet une installation perfectionnée de façon à remédier à ces inconvénients.

Conformément à l'invention, les mâchoires arrières sont placées directement contre l'extrémité de sortie du four, dans le prolongement du logement, de façon à constituer avec celui-ci une enceinte pratiquement continue et la mâchoire avant est maintenue, après coulissement transversal, dans l'alignement du logement, pour constituer une porte de fermeture du four entre deux opérations de cisaillage.

De préférence, la partie de face arrière de la mâchoire avant placée, après coulissement dans l'alignement du logement, est munie d'une plaque en matière réfractaire pour l'obturation de l'orifice limité par les mâchoires arrières.

Pour réduire au minimum les déperditions de chaleur, le bâti fixe dans lequel sont montées les mâchoires arrières est relié à l'extrémité de sortie du four par un moyen d'accouplement susceptible de résister à la chaleur.

Dans un mode de réalisation particulièrement avantageux, au moins les mâchoires arrières sont munies de moyens de chauffage de la partie du lopin qu'elles enserrent entre deux opérations de cisaillement.

Mais l'invention sera mieux comprise par la description détaillée d'un mode de réalisation particulier, donné à titre d'exemple et représenté sur les dessins annexes.

- la Fig. 1 représente schématiquement l'ensemble d'une installation de préparation de billette;
- les Fig. 2 à 5 sont des schémas représentant les opérations successives de cisaillage;
- les Fig. 6 et 7 représentent la cisaille à échelle agrandie, respectivement dans ses deux positions d'enfilement et de cisaillage.

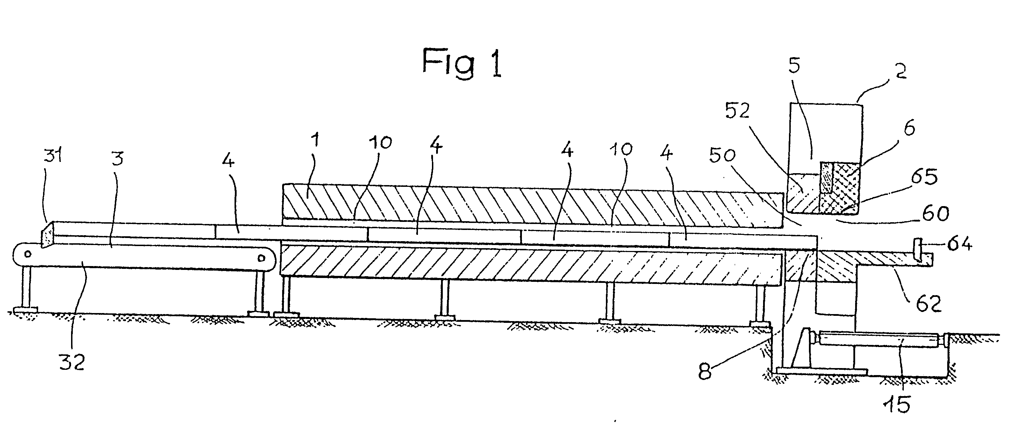

L'installation représentée schématiquement sur la Fig. 1 comprend un four de réchauffage 1, une cisaille 2 et un moyen 3 de poussée des lopins 4 les uns à la suite des autres à l'intérieur du four. Ce dernier est constitué d'une enceinte limitant un logement allongé 10 de section supérieure à celle des lopins et de grande longueur, celle-ci devant être au moins égale à celle d'un lopin mais pouvant aussi, si l'encombrement le permet, être suffisante pour que le four contienne plusieurs lopins, ce qui permet une meilleure récupération de la chaleur. Les lopins se déplacent le long de l'axe longitudinal du logement 10 sous l'action d'un moyen de poussée 3 qui peut être constitué d'une butée 31 montée sur un ruban sans fin 32 actionné apr un moyen non représenté de façon à faire avancer les lopins 4 l'un derrière l'autre de la distance voulue. L'enceinte du four 1 est munie de moyens de chauffage classique non représentés, comme des brûleurs à gaz, placés normalement du côté de la sortie et qui permettent de faire monter la température des lopins 4 jusqu'au niveau voulu, compte-tenu du temps moyen passé à l'intérieur du four.

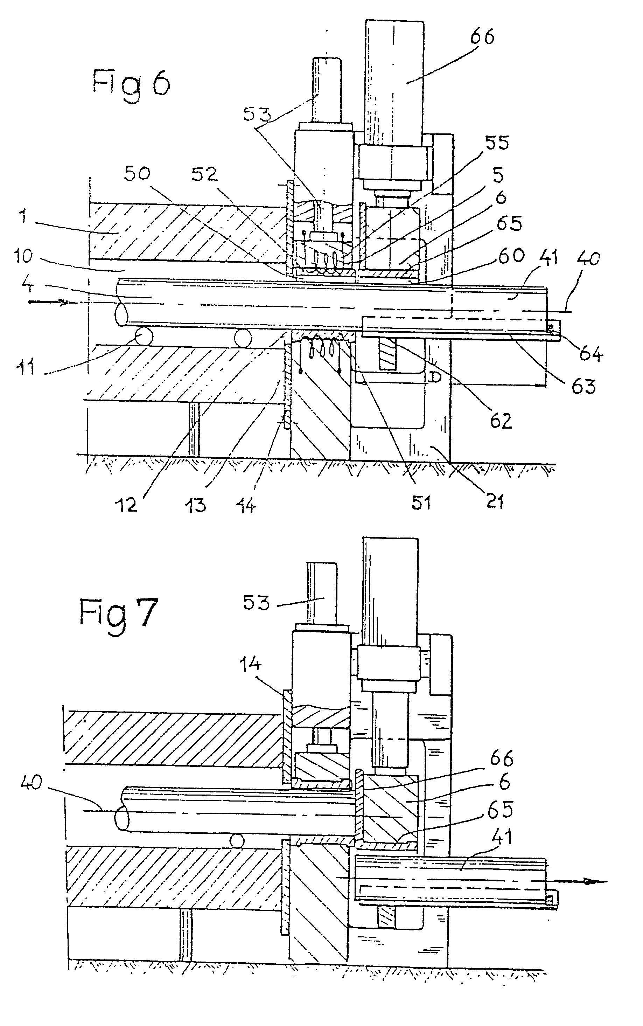

La cisaille 2, représentée plus en détails sur les Fig. 6 et 7, comprend, à l'intérieur d'un bâti fixe 21, une paire de mâchoires arrières 5 et une paire de mâchoires avant 6.

Les mâchoires arrières 5 comprennent une mâchoire d'appui inférieure 51 fixée sur le bâti 21 et une mâchoire supérieure 52 montée mobile sur une faible distance transversalement à l'axe 40 du lopin 4 et actionnée par un vérin 53 de serrage du lopin 4 entre les mâchoires 51 et 52, celles-ci définissant un orifice 50 de section légèrement supérieure à celle du lopin.

Les mâchoires avant 6 sont montées coulissantes dans ce même bâti 21 perpendiculairement à l'axe 40 du lopin 4. Elles comprennent une mâchoire supérieure 65 et une mâchoire inférieure 62 qui ne supporte, pendant le cisaillage, pratiquement pas d'effort et peut être constituée d'une simple goulotte prolongée vers l'avant par une partie 63 en porte-à-faux, de longueur suffisante pour supporter la partie de la billette s'étendant à l'extérieur de la mâchoire 6. De façon connue, le prolongement 63 de la goulotte 62 est muni d'une butée réglable 64 dont la distance D par rapport à la face avant des mâchoires arrières 5 permet de définir la longueur donnée à la billette 41.

Le cisaillage est effectué par la mâchoire supérieure 65 dont la section correspond sensiblement à celle de la paroi supérieure du lopin 4 et qui se déplace selon une direction perpendiculaire à l'axe 40 du lopin, sous l'action d'un vérin de coupe 66 prenant appui sur le bâti 21.

Sur la Fig. 6, on a représenté la cisaille en position ouverte. Les mâchoires sont relevées et définissent un orifice de passage du lopin, placé dans le prolongement du logement 10 du four et centré sur l'axe longitudinal 40. La mâchoire avant inférieure 51 et la goulotte 62 sont réglées à la hauteur de la partie inférieure du lopin 4 qui se déplace dans le logement 10 sur des moyens d'appui, par exemple un chemin de roulement 11.

Selon la caractéristique essentielle, la porte de fermeture de l'orifice de sortie 12 du four est supprimée et le bâti 21 de la cisaille est placé directement contre l'extrémité 13 de l'enceinte du four 1, de telle sorte que les deux mâchoires 5 et 6 soient placées dans le prolongement du logement 10. A cet effet, le bâti 21 peut être relié à l'enceinte du four 1 par un moyen d'accouplement fixe ou souple susceptible de résister à la chaleur et qui peut être constitué d'une plaque 14 en acier réfractaire solidaire de l'extrémité 13 du four et que l'on peut visser directement sur le bâti 21 de la cisaille. La continuité thermique entre le logement 10 du four et le logement 50 constitué par la cisaille est ainsi assurée et l'on peut d'ailleurs munir la mâchoire arrière 5 de moyens de chauffage constitués par exemple par des enroulements conducteurs 55, comme on l'a représenté schématiquement sur la figure.

Les dispositions qui viennent d'être décrites permettent d'améliorer sensiblement le cycle de fonctionnement de l'installation. En effet, après le cisaillage d'une billette, les mâchoires avant 6 restent dans la position représentée sur la Fig. 7 alors que la billette 41 est évacuée de façon connue par exemple par un chariot 15, dans lequel la billette peut être déversée, par exemple par un bras portant la goulotte 62 et monté pivotant autour d'un axe horizontal. Le chariot 15, en roulant sur des rails, amène ensuite la billette vers un dispositif de chargement dans la presse non représenté sur les dessins.

Jusqu'à présent, après le déchargement de la billette coupée, on remontait la mâchoire avant 6 en position de repos et on fermait le four. Dans la disposition, décrite au contraire, la mâchoire avant 65 reste en position de cisaillage de façon que sa partie 66 placée, dans cette position, dans l'alignement du lopin constitue une porte de fermeture du logement 10 du four prolongée par le logement 50 de la mâchoire arrière 5. A cet effet, la partie arrière correspondante 66 de la mâchoire 6 peut être constituée par une plaque en matériau réfractaire qui constitue un organe d'obturation du four. Dans cette position de repos, la mâchoire arrière supérieure 52 peut être remontée par le vérin 53 de façon à desserrer l'extrémité du lopin enfilée dans la mâchoire 5.

A partir de cette position, le cycle de cisaillage se déroule de la façon suivante dont les phases successives ont été représentées schématiquement sur les Fig. 1 à 5.

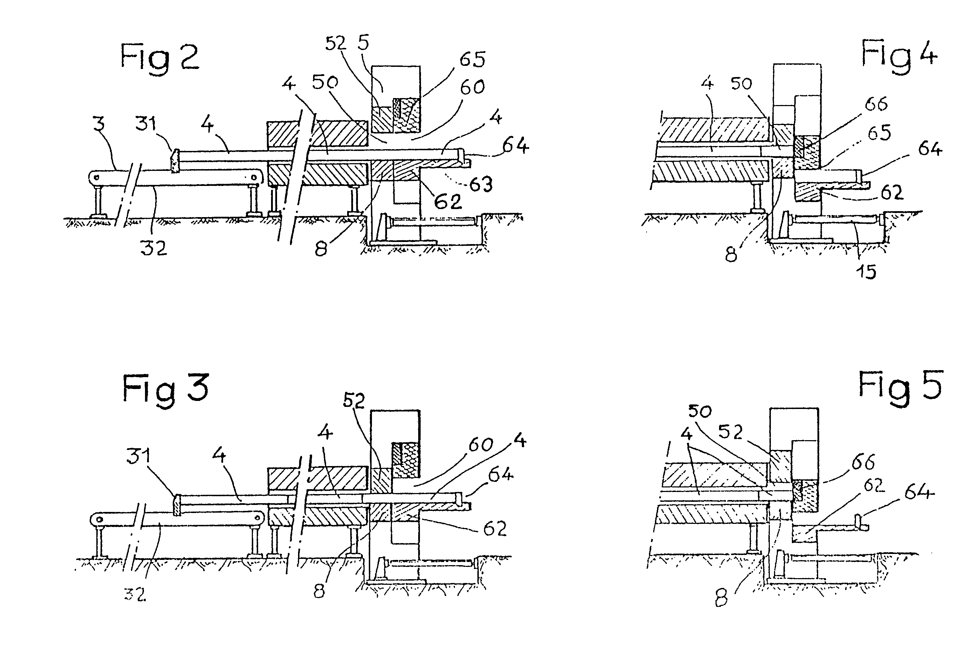

1. A partir d'une instruction "appel nouvelle billette" les mâchoires avant 6 sont remontées. L'orifice 60 limité par la goulotte 62 et par la mâchoire supérieure 65 vient donc se mettre dans le prolongement de l'orifice 50 et du logement 10, dans la position représentée sur la Fig. 1.
2. Le four étant ainsi ouvert, on fait avancer le lopin 5, au moyen de la butée 31, de la longueur désirée, c'est-à-dire jusqu'à la butée 64, dans la position représentée sur la Fig. 2.
3. Le vérin 53 commande alors le serrage de l'extrémité du lopin 4 par déplacement transversal de la mâchoire arrière supérieure 52 (Fig. 3).
4. Le vérin 66 commande ensuite le déplacement des mâchoires avant 6 et le cisaillage de la billette par la mâchoire supérieure 65 (Fig. 4). La partie réfractaire 66 de la mâchoire avant, qui coulisse le long de la face avant 51 de la mâchoire arrière 5 vient se placer en travers de l'axe 40 du lopin (Fig. 4)
5. La mâchoire arrière supérieure 52 peut alors être relevée par le vérin 53 pour desserrer l'extrémité du lopin 4; le logement 50 limité par les mâchoires 5 et prolongeant le logement 10 du four, est obturé par la plaque réfractaire 66 de façon à éviter les déperditions de chaleur. On se retrouve ainsi dans la position de départ du cycle.

On voit que le cycle de cisaillage est simplifié puisque l'on supprime l'opération de réenfournement du lopin à l'intérieur du four 1. D'une part, on diminue ainsi le temps du cycle de cisaillage et, si la cadence de la presse le justifie, on peut supprimer la phase de fermeture du four en revenant directement, après cisaillage, à la position d'avancée du lopin pour le cisaillage d'une nouvelle billette. D'autre part, le rendement thermique du four se trouve sensiblement amélioré, le four ne restant ouvert que pendant la phase d'avancée du lopin et de cisaillage.

Par ailleurs, le matériel est simplifié puisque l'on supprime la porte de fermeture du four, le vérin de réenfournement et la liaison qui était nécessaire entre le four et la cisaille lorsque celle-ci était éloignée du four pour laisser le passage de la porte. Cette simplification du matériel en augmente la fiabilité et diminue les problèmes d'entretien.

Enfin, en supprimant la phase de réenfournement des lopins après cisaillage, on diminue les déplacements du lopin et on augmente donc la durée de vie des chemins de glissement 11 du four.

Bien entendu, l'invention ne se limite pas aux détails du mode de réalisation qui vient d'être décrit, d'autres dispositions pouvant être choisis, dans le cadre des revendications, pour obtenir le même résultat.

## Revendications

1. Installation de préparation de billettes de métal destinées à être transformées par extrusion dans une presse de filage, comprenant:

 - un four (1) de réchauffage comprenant une enceinte munie de moyens de chauffage et limitant un logement allongé (10) ayant une longueur suffisante pour contenir un lopin (4) de métal destiné à être découpé en une pluralité de billettes;
 - des moyens de poussée du lopin (4) hors du logement (10) suivant un axe longitudinal de déplacement en passant par un orifice de sortie placé à une extrémité (13) dudit logement (10);
 - une cisaille de coupe du lopin (4), comprenant deux parties accolées, respectivement une partie arrière (5) fixée sur un bâti (21) et une partie avant (6) montée coulissante le long de la face avant de la partie arrière (5), transversalement à l'axe de déplacement du lopin (4), la partie arrière (5) comprenant deux mâchoires (51, 52) définissant un orifice (50) de passage du lopin (4) et un moyen (53) de serrage du lopin (4) entre les mâchoires (51, 52), la partie avant (6) comprenant au moins une mâchoire supérieure (65) et un moyen (67) de commande du cisaillement par déplacement de ladite mâchoire supérieure (65), perpendiculairement à l'axe (40) du lopin (4) entre une position remontée d'avancement du lopin (4) et une position abaissée après cisaillement, pour laquelle la partie arrière (66) de la mâchoire avant (65) vient se placer en travers de l'axe (40) du lopin (4);
 - des moyens (64) de mesure d'une longueur d'avancement du lopin (4) correspondant à la longueur d'une billette à cisailler;
 - le bâti (21) de la cisaille étant placé directement contre l'extrémité (13) de sortie du four (1) de telle sorte que les mâchoires arrière (51, 52) soient placées dans le prolongement du logement (10) et forment avec ce dernier une enceinte pratiquement continue;
- la position abaissée de la mâchoire avant (65) constituant une position de repos dans laquelle la partie arrière (66) de la mâchoire avant (65) constitue une porte d'obturation du logement (10) du four (1) prolongé par les mâchoires arrière (51, 52).

2. Installation de préparation de billettes selon la revendication 1, caractérisée par le fait que la face arrière de la mâchoire avant placée, après coulissement dans l'alignement du logement (10), est munie d'une plaque en matière réfractaire (66), d'obturation de l'orifice (50) limité par les mâchoires arrières (5).

3. Installation de préparation de billettes selon la revendication 1, caractérisée par le fait que le bâti fixe (21) dans lequel sont montées les mâchoires arrières (5) est relié à l'extrémité (13) de sortie du four (1) par un moyen d'accouplement (14) susceptibles de résister à la chaleur.

4. Installation de préparation de billettes selon la revendication 1, caractérisée par le fait qu'au moins les mâchoires arrières (5) sont munies de moyens (55) de chauffage, entre deux opérations de cisaillement, de la partie (41) du lopin (4) qu'elles enserrent.

**Patentansprüche**

1. Anlage zur Vorbereitung von Metallstücken zum Umformen durch Extrusion in einer Strangpresse mit:

- einem Erwärmungsofen (1) mit einem Raum, der mit Heizmitteln ausgestattet ist und ein längliches Gehäuse (10) begrenzt, das eine ausreichende Länge besitzt, um einen Stangenabschnitt (4) aus Metall einzuschließen, der in eine Vielzahl von Stücken geschnitten werden soll;
- Stoßmitteln für den Stangenabschnitt (4) außerhalb des Gehäuses (10) entsprechend einer Verschiebelängsachse, wobei der Stangenabschnitt durch eine Austrittsöffnung hindurchgeht, die an einem Ende (13) des Gehäuses (10) angeordnet ist;
- einer Schneidschere für den Stangenabschnitt (4), die zwei verbundene Teile aufweist bzw. ein rückwärtiges Teil (5), das auf einem Gestell (21) befestigt ist, und ein vorderes Teil (6), das verschiebbar längs der Seite vor dem vorderen Teil (5) angebracht ist, quer zur Verschiebeachse des Stangenabschnittes (4), wobei das rückwärtige Teil (5) zwei Backen (51, 52) aufweist, die eine Durchgangsöffnung (50) für den Stangenabschnitt bilden, und ein Spannmittel (53) für den Stangenabschnitt (4) zwischen den Backen (51, 52) aufweist, wobei das vordere Teil (6) mindestens eine obere Backe (65) und ein Steuermittel (67) für das Abscheren durch Verschieben des oberen Backens (65) aufweist, und zwar senkrecht zur Achse (40) des Stangenabschnittes (4) zwischen einer hochgezogenen Position des Vorschubes des Stangenabschnittes (4) und einer abgesenkten Position nach dem Abscheren, für welche das hintere Teil (66) des vorderen Backens (65) quer zur Achse (40) des Stangenabschnittes (4) in Position geht;
- Mitteln (64) zum Messen einer Länge des Vorschubes des Stangenabschnittes (4) entsprechend der Länge eines abzuscherenden Stückes,
- wobei das Gestell (21) der Schere direkt gegen das Ende (13) des Ausganges des Ofens (1) derart angeordnet ist, daß die hinteren Backen (51, 52) in der Verlängerung des Gehäuses (10) angeordnet sind und mit dem Gehäuse einen praktisch fortlaufenden Raum bilden,
- wobei die abgesenkte Position des vorderen Backens (65) eine Ruheposition bildet, in welcher das hintere Teil (66) des vorderen Backens (65) eine Verschließtür für das Gehäuse (10) des Ofens (1) bildet, welcher durch die hinteren Backen (51, 52) verlängert ist.

2. Anlage zur Vorbereitung von Stücken nach Anspruch 1, dadurch gekennzeichnet, daß die nach dem Verschieben in Flucht zum Gehäuse (10) angeordnete Rückseite der Vorderbacke mit einer Platte aus feuerfestem Material (66) welche die durch die hinteren Backen (5) begrenzte Öffnung (50) verschließt, versehen ist.

3. Anlage zur Vorbereitung von Stücken nach Anspruch 1, dadurch gekennzeichnet, daß das feste Gestell (21), in welchem die rückwärtigen Backen (5) angebracht sind, mit dem Ende (13) des Austritts des Ofens (1) durch ein Kupplungsmittel (14) verbunden ist, geeignet, der Wärme zu widerstehen.

4. Anlage zur Vorbereitung von Stücken gemäß Anspruch 1, dadurch gekennzeichnet, daß mindestens die rückwärtigen Backen (5) mit Mitteln zum Heizen des Teils (41) des Stangenabschnittes (4), welchen sie einspannen, zwischen zwei Schneidvorgängen versehen sind.

**Claims**

1. Installation for preparing metal billets intended to be converted by extrusion in an extrusion press, comprising:

- a heating furnace (1) comprising an enclosure equipped with heating means and limiting an elongate housing (10) having a length sufficient for containing a metal bloom (4) intended to be cut into a plurality of billets;
- means for pushing the bloom (4) out of the receptacle (10) along a longitudinal axis of movement, passing through an outlet orifice located at one end (13) of the said housing (10);
- a shear for cutting the bloom (4), comprising two connected parts, respectively a rear part (5) fastened to a frame (21) and a front part (6) mounted so as to slide along the front face of the rear part (5) transversely relative to the axis of movement of the bloom (4), the rear part (5) comprising two jaws (51, 52) defining a passage orifice (50) for the bloom (4) and a means (53) for clamping the bloom (4) between the jaws (51, 52), and the front part (6) comprising at least one upper jaw (65) and a means (67) for controlling the shearing by moving the said upper jaw (65) perpendicularly relative to the axis (40) of the bloom (4) between a raised position of advance of the bloom (4) and a lowered position after shearing, in which the rear part (66) of the front jaw (65) takes its place across the axis (40) of the bloom (4);
- means (64) for measuring a length of advance of the bloom (4) corresponding to the length of a billet to be sheared;
- the frame (21) of the shear being placed directly against the outlet end (13) of the furnace (1), in such a way that the rear jaws (51, 52) are arranged in the extension of the housing (10) and with the latter form a virtually continuous enclosure;
- the lowered position of the front jaw (65) forming a position of rest in which the rear part (66) of the front jaw (65) constitutes a door closing the housing (10) of the furnace (1) extended by the rear jaws (51, 52).

2. Installation for preparing billets according to Claim 1, characterized in that the rear face of the front jaw arranged in alignment with the housing (10) after sliding is equipped with a plate (66) made of refractory material for shutting off the orifice (50) limited by the rear jaws (5).

3. Installation for preparing billets according to Claim 1, characterized in that the fixed frame (21) in which the rear jaws (5) are mounted is connected to the outlet end (13) of the furnace (1) by a coupling means (14) capable of resisting heat.

4. Installation for preparing billets according to Claim 1, characterized in that at least the rear jaws (5) are equipped with means (55) for the heating, between two shearing operations, of that part (41) of the bloom (4) which they grip.

# Fig 1

Fig 2

Fig 3

Fig 4

Fig 5

EP 0 187 577 B1

Fig 6

Fig 7